# EUROPEAN PATENT SPECIFICATION

(11) **EP 2 248 330 B1**
(45) Date of publication and mention of the grant of the patent: **11.07.2012**
(21) Application number: 08787058.0
(22) Date of filing: 08.08.2008
(51) Int. Cl.: H04M 1/23, H01H 13/70, G06F 3/02

(54) **DUST PROOF INFORMATION INPUT DEVICE**
STAUBDICHTEINFORMATIONSEINGABEEINRICHTUNG
DISPOSITIF D'ENTRÉE D'INFORMATIONS ÉTANCHE À LA POUSSIÈRE

(30) Priority: 26.02.2008 US 37134
(43) Date of publication of application: 10.11.2010
(73) Proprietor: Sony Ericsson Mobile Communications AB, 221 88 Lund (SE)
(72) Inventor: KARLELID, Torbjörn, S-21232 Malmö (SE); FAGRENIUS, Gustav, S-247 51 Dalby (SE)
(74) Representative: Aurell, Henrik
(86) International application number: PCT/EP2008/060469
(87) International publication number: WO 2009/106155

(56) References cited:
- US-A- 4 251 697
- US-A1- 2004 057 769
- US-B1- 6 771 992

## Description

### TECHNICAL FIELD

The present invention relates to a radio communication terminal comprising an information input device and an information receiving device comprising a mounting module.

### BACKGROUND ART

The first commercially attractive cellular telephones or terminals were introduced in the market at the end of the 1980's. Since then, a lot of effort has been made in making smaller radio communication terminals, with much help from the miniaturisation of electronic components and the development of more efficient batteries. Today, numerous manufacturers offer pocket-sized radio communication terminals with a wide variety of capabilities and services.

In order to attract customers, the terminal manufacturers have therefore taken further measures to strengthen their position in the competition. One way of strengthen the position is to enhance the functionality and to minimize the risk of that a device in the radio communication terminal stops working. Dust and particles penetrating an outer shell of the radio communication terminal ruining the function of a device, such as a joy stick, is one problem that jeopardise the function of the radio communication terminal.

### SUMMARY OF THE INVENTION

A radio communication terminal defined in claim 1 is provided according to the present invention.

More specifically the invention relates to a radio communication terminal comprising a information input device and a information receiving device comprising a mounting module, wherein said information input device is adapted to be connected to the mounting module, said information receiving device comprise a flange portion arranged along the circumferential periphery of the mounting module, said radio communication terminal further comprise a flexible member, which is adapted to be arranged on the flange portion and to enclose the information input device.

An advantage of such a radio communication terminal is that the information input device is protected against dust and particles penetrating the radio communication terminal between the shell and the information input device.

A further advantage is that the information input device also is protected against any dust or particles that have penetrated the radio communication terminal in areas other than between shell and the information input device.

Another advantage is that the sealing force between the flange portion and the flexible member could be accomplished via frictional force.

A further advantage is that the flexible member could be detached to admit replacement or reparation of the information input device.

The information input device can be a joy stick.

The information receiving device can be a printed circuit board.

The flange portion can be soldered to the information receiving device. This is an easy and economic way to connect the flange portion to the information receiving device. A further advantage of this is that the flange portion can be connected after the production of the information receiving device and thus the production does not need to be affected of the implementation of such a flange portion.

To enhance the arrangement of and to improve the frictional force between the information receiving device and the flexible member the inner circumference of the flexible member can be smaller than the outer circumference of the flange portion and that the flexible member can be connected to the flange by frictional force.

The flexible member can comprise a joy stick top adapted to be mounted on to the joy stick. The advantage of this is that the appearance and the feeling of the joy stick do not have to be affected.

To reduce the number of manufacturing steps, and thereby also reduce the costs, the flange portion can be integrated in the flexible member.

The flexible member can be made of silicone or a thermoplastic elastomer.

The flexible member can have the shape of an inverted bow

### BRIEF DESCRIPTION OF THE DRAWINGS

The features and advantages of the present invention will be more apparent from the following description of embodiments with reference to the accompanying drawings, in which
Fig. 1 schematically illustrates a radio communication terminal in the form of a mobile telephone.
Fig. 2 schematically illustrates an information receiving device according to an embodiment of the invention.
Fig. 3 schematically illustrates an information receiving device and an information input device according to an embodiment of the invention
Fig. 4 schematically illustrates a flexible member arranged on to an information receiving device according to an embodiment of the invention.
Fig. 5 schematically illustrates a cross sectional view along the line A-A in fig. 4.

### DETAILED DESCRIPTION

The present description relates to the field of radio communication terminals. The term radio communication terminal or communication terminal includes all mobile equipment devised for radio communication with a radio station, which radio station also may be a mobile terminal or e.g. a stationary base station. Consequently, the term radio terminal includes mobile telephones, pagers, communicators, electronic organisers, smart phones, PDA:s (Personal Digital Assistants) and DECT terminals (Digital Enhanced Cordless Telephony).

Embodiments of the present invention relate, in general, to a radio communication terminal, such as a mobile phone. However, for the sake of clarity and simplicity, most embodiments outlined in this specification are related to mobile phones.

Furthermore, it should be emphasised that the term comprising or comprises, when used in this description and in the appended claims to indicate included features, elements or steps, is in no way to be interpreted as excluding the presence of other features elements or steps than those expressly stated.

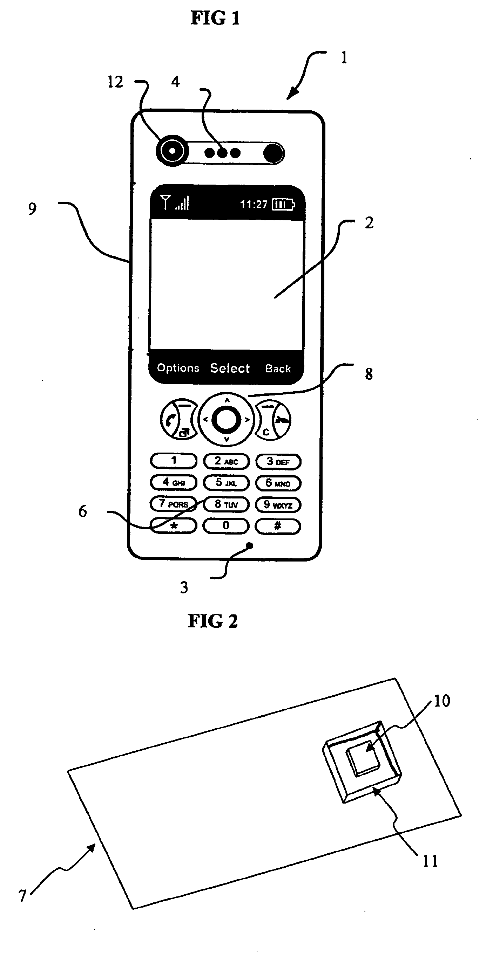

Exemplary embodiments will now be described with references made to the accompanying drawings. Fig.1 discloses a radio communication terminal 1. The radio communication terminal 1 is in the disclosed embodiment a mobile telephone 1 comprising a display 2, a microphone 3, a speaker 4, a camera 12, a information input device 5 (not shown in Fig.1), a key board 6, an information receiving device 7 (not shown in Fig.1), a flexible member 8 and a shell 9. The function and design of a mobile telephone as such is defined in the prior art and will not be described in detail herein.

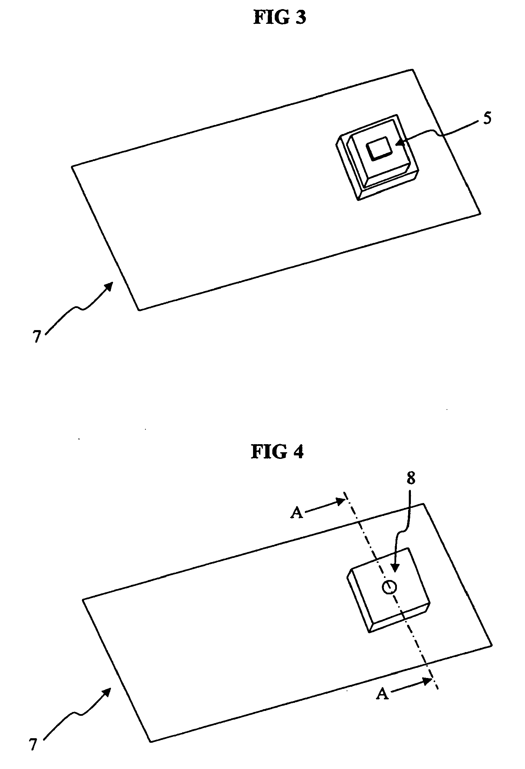

Hereafter reference is made to fig. 2-5. The information input device 5 is in the shown embodiment a joy stick 5. The function of a joy stick as such is described in the prior art and will not be described in detail herein.

The information receiving device 7 could be a printed circuit board. The information receiving device 7 comprise a mounting module 10 and a flange portion 11.

The flange portion 11 has a rectangular shape and is arranged around the circumferential periphery of the mounting module 10. The flange portion 11 could be soldered to the information receiving device 7. The height of the flange portion 11 is adapted to the height and the size of the mounting module 10 and the information input device 5 and to the material of the flexible member 8. The height of the flange portion 11 is directed perpendicular to the side of information receiving device 7 on which the mounted module 10 is mounted. It should be understood that the shape of the flange portion not is limited to a rectangular shape, but it could have many shapes such as circular, octagonal etc.

However, it should be understood that the flange portion could be arranged with an angle separated from 90 degrees. It should also be understood that the flange portion could be curved towards the mounting module 10.

The flexible member 8 has, in the shown embodiment, a bowl shape with a rectangular cross section. The inner contour of bowl-shape corresponds to the outer shape of the flange portion 11. The flexible member 8 could be made of many different flexible materials such as silicone, rubber, thermoplastic elastomer or plastic.

The mounting module 10 is adapted to be connected to the joy stick 5 and to forward information from the joy stick 5 to the information receiving device 7.

The joy stick 5 is mounted on the mounting module 10. As the flange portion 11 is arranged around the circumferential periphery of the mounting module 10, it will also surround the circumferential periphery of the mounted joy stick 5.

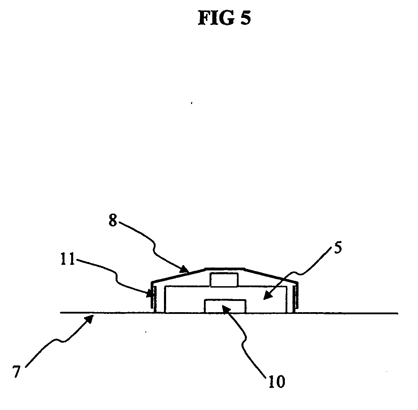

To arrange the flexible member 8 on the flange portion 11, a force is applied to the flexible member 8 to expand it in a circumferential direction. The expanded flexible member 8 has now a wider inner circumferential periphery than the outer circumferential periphery of the flange member 8. The flexible member 8 is applied on to the flange portion 11, see fig. 5. The force applied to the flexible member 8 is thereafter removed. The flexible member 8 then flexes back and is pressed against the flange portion 11.

When the flexible member 8 is arranged on the flange portion 11 it will cover the flange portion 11, the mounting module 10 and the joy stick 5. The flexible member 8 thus encloses the information input device 5 and protects it from dust and particles. The flexible member 8 protects the information input device 5 and the information receiving device 7 from both dust and particles that may have entered between the shell 9 and the flexible member 8 and from dust and particles entered into the shell 9 in any other opening.

In one embodiment the flexible member comprises a joy stick top adapted to be mounted on to the joy stick. By doing this the shape of the flexible member could be made with a shape that looks like a joy stick.

In another embodiment the flange portion is integrated in the flexible member.

In another embodiment the flexible member is pressed on to the flange portion. It should be understood that the invention is not limited to the method of mounting the flexible member to the flange portion.

The information input device has been described as a joy stick. However it should be understood that an information input device is not limited to be a joy stick, it could for instance be a button, a key pad, a key board etc.

The principles of the present invention have been described in the abovementioned by examples of embodiments or modes of operations. However, the invention should not be construed as being limited to the particular embodiments discussed above, which are illustrative rather than restrictive, and it should be appreciated that variations may be made in those embodiments by persons skilled in the art, without departing from the scope of the present invention as defined by the appended claims.

## Claims

1. Radio communication terminal (1) comprising an information input device (5) and an information receiving device (7) comprising a mounting module (10), wherein
said information input device (5) is adapted to be connected to the mounting module (10),
said information receiving device (7) comprises a flange portion (11) arranged along the circumferential periphery of the mounting module (10),
said radio communication terminal (1) further comprises a flexible member (8), which is adapted to be arranged on the flange portion (11) and to cover the flange portion (11), the mounting module (10) and the information input device (5).

2. Radio communication terminal (1) as claimed in claim 1, wherein said information input device is a joy stick (5).

3. Radio communication terminal (1) as claimed in any of the preceding claims, wherein said information receiving device (7) is a printed circuit board.

4. Radio communication terminal (1) as claimed in any of the preceding claims, wherein the flange portion (11) is soldered to the information receiving device (7).

5. Radio communication terminal (1) as claimed in any of the preceding claims, wherein an inner circumference of the flexible member (8) is smaller than the outer circumference of the flange portion (11) and that the flexible member (8) is mounted on to the flange portion (11) by frictional force.

6. Radio communication terminal (1) as claimed in claim, wherein the flexible member (8) comprises a joy stick top adapted to be mounted on to the joy stick (5).

7. Radio communication terminal (1) as claimed in any of the preceding claims, wherein the flange portion (11) is integrated in the flexible member (8).

8. Radio communication terminal (1) as claimed in any of the preceding claims, wherein the flexible member (8) is made of silicone.

9. Radio communication terminal (1) as claimed in any of the claims 1-7, wherein the flexible member (8) is made of a thermoplastic elastomer.

10. Radio communication terminal (1) as claimed in any of the preceding claims, wherein the flexible member (8) has the shape of a bowl.

## Patentansprüche

1. Funkkommunikationsendgerät (1) umfassend eine Informationseingabevorrichtung (5) und eine Informationsempfangseinheit (7) umfassend ein Anbringungsmodul (10), wobei
die Informationseingabevorrichtung (5) angepasst ist, mit dem Anbringungsmodul (10) verbunden zu werden,
die Informationsempfangsvorrichtung (7) einen Flanschabschnitt (11) umfasst, der entlang der umlaufenden Peripherie des Anbringungsmoduls (10) angeordnet ist,
das Funkkommunikationsendgerät (1) ferner ein biegbares Element (8) umfasst, welches angepasst ist, auf dem Flanschabschnitt (11) angeordnet zu werden und den Flanschabschnitt (11), das Anbringungsmodul (10) und die Informationseingabevorrichtung (5) zu bedecken.

2. Funkkommunikationsendgerät (1) nach Anspruch 1, wobei die Informationseingabevorrichtung ein Joystick (5) ist.

3. Funkkommunikationsendgerät (1) nach einem der vorangehenden Ansprüche, wobei die Informationsempfangsvorrichtung (7) eine Leiterplatte ist.

4. Funkkommunikationsendgerät (1) nach einem der vorangehenden Ansprüche, wobei der Flanschabschnitt (11) auf die Informationsempfangsvorrichtung (7) gelötet ist.

5. Funkkommunikationsendgerät (1) nach einem der vorangehenden Ansprüche, wobei ein innerer Umfang des biegbaren Elements (8) kleiner ist als der äußere Umfang des Flanschabschnitts (11) und dass das biegbare Element (8) auf dem Flanschabschnitt (11) durch Reibungskräfte angebracht ist.

6. Funkkommunikationsendgerät (1) nach Anspruch 2, wobei das biegbare Element (8) ein Joystick-Oberteil umfasst, das angepasst ist, auf dem Joystick (5) angebracht zu werden.

7. Funkkommunikationsendgerät (1) nach einem der vorangehenden Ansprüche, wobei der Flanschabschnitt (11) in dem biegbaren Element (8) integriert ist.

8. Funkkommunikationsendgerät (1) nach einem der vorangehenden Ansprüche, wobei das biegbare Element (8) aus Silikon gemacht ist.

9. Funkkommunikationsendgerät (1) nach einem der Ansprüche 1-7, wobei das biegbare Element (8) aus einem thermoplastischen Elastomer gemacht ist.

10. Funkkommunikationsendgerät (1) nach einem der vorangehenden Ansprüche, wobei das biegbare Element (8) die Form einer Schale hat.

## Revendications

1. Terminal de radiocommunication (1), comprenant un dispositif d'entrée d'informations (5) et un dispositif de réception d'informations (7) comprenant un module de montage (10),
dans lequel :
ledit dispositif d'entrée d'informations (5) est conçu pour être connecté au module de montage (10) ;
ledit dispositif de réception d'informations (7) comprend une partie en forme de bride (11) disposée sur la périphérie circonférentielle du module de montage (10) ;
ledit terminal de radiocommunication (1) comprenant en outre un élément flexible (8) qui est conçu pour être disposé sur la partie en forme de bride (11) et pour couvrir la partie en forme de bride (11), le module de montage (10) et le dispositif d'entrée d'informations (5).

2. Terminal de radiocommunication (1) selon la revendication 1, dans lequel ledit dispositif d'entrée d'informations est un levier de commande (5).

3. Terminal de radiocommunication (1) selon l'une quelconque des revendications précédentes, dans lequel ledit dispositif de réception d'informations (7) est une carte de circuits imprimés.

4. Terminal de radiocommunication (1) selon l'une quelconque des revendications précédentes, dans lequel la partie en forme de bride (11) est soudée sur le dispositif de réception d'informations (7).

5. Terminal de radiocommunication (1) selon l'une quelconque des revendications précédentes, dans lequel une circonférence intérieure de l'élément flexible (8) est plus petite que la circonférence extérieure de la partie en forme de bride (11) et l'élément flexible (8) est retenu sur la partie en forme de bride (11) par une force de friction.

6. Terminal de radiocommunication (1) selon la revendication 2, dans lequel l'élément flexible (8) comprend un carter de levier de commande conçu pour être monté sur le levier de commande (5).

7. Terminal de radiocommunication (1) selon l'une quelconque des revendications précédentes, dans lequel la partie en forme de bride (11) est intégrée dans l'élément flexible (8).

8. Terminal de radiocommunication (1) selon l'une quelconque des revendications précédentes, dans lequel l'élément flexible (8) est fait de silicone.

9. Terminal de radiocommunication (1) selon l'une quelconque des revendications 1 à 7, dans lequel l'élément flexible (8) est fait d'un élastomère thermoplastique.

10. Terminal de radiocommunication (1) selon l'une quelconque des revendications précédentes, dans lequel l'élément flexible (8) a la forme d'une boule.
